Europäisches Patentamt

European Patent Office

Office européen des brevets

(11) Publication number: **0 430 418 A2**

# EUROPEAN PATENT APPLICATION

(21) Application number: **90311335.5**

(22) Date of filing: **16.10.90**

(51) Int. Cl.5: **G02F 1/136**

(30) Priority: **30.11.89 JP 309339/89**

(43) Date of publication of application:
**05.06.91 Bulletin 91/23**

(84) Designated Contracting States:
**DE FR GB Bulletin**

(71) Applicant: **Kabushiki Kaisha Toshiba
72, Horikawa-cho Saiwai-ku
Kawasaki-shi(JP)**

(72) Inventor: **Masahiko, Akiyama, c/o Intellectual
Property Div.
Kabushiki Kaisha Toshiba, 1-1 Sibaura
1-chome
Minato-ku, Tokyo 105(JP)**

(74) Representative: **Freed, Arthur Woolf et al
MARKS & CLERK 57-60 Lincoln's Inn Fields
London WC2A 3LS(GB)**

(54) Liquid crystal display and method of manufacturing the same.

(57) A liquid crystal display includes an active matrix substrate having a unit picture element having a scanning line (4), a signal line (5), a picture element electrode (3), and a first active element (1) connected to the scanning line (4), the signal line (5), and the picture element electrode (3), an opposed substrate (26) opposing the active matrix substrate, and a liquid crystal layer (25) sandwiched between the active matrix substrate and the opposed substrate (26). The unit picture element further includes a second active element (2). At least portions of wirings between source or drain electrodes (20, 21) of the second active element (2) and its picture element electrode (3) are vertically overlapped and insulated from each other. A method of manufacturing the liquid crystal display includes the steps of applying a voltage to the scanning line (4) and the signal line (5) to perform a display operation of a corresponding unit picture element, cutting wirings of the first active element (1) constituting a unit picture element determined to be bad on the basis of the display operation so as to set the first active element (1) in an electrically floating state, and connecting the vertically overlapped and insulated portions, thereby connecting wirings of the second active element (2) so that the second active element (2) is connected to the scanning line (4), the signal line (5), and the picture element electrode (3).

EP 0 430 418 A2

## LIQUID CRYSTAL DISPLAY AND METHOD OF MANUFACTURING THE SAME

The present invention relates to a liquid crystal display to be used as a flat panel display or the like and a method of manufacturing the same.

An active matrix type liquid crystal display has a lot of picture elements and good image quality and is therefore expected to be promising as a flat panel display. However, as the number of picture elements is increased and a display area is enlarged, it becomes difficult to manufacture the entire surface of an active matrix substrate without any defect. For example, a 640-x 480-pixel color display actually has 640 x 3 x 480 = 921,600 picture elements. Therefore, failure factors of the display such as a disconnection or a short-circuit must be eliminated throughout all of about 920,000 transistors, 1,920 signal lines, and 480 scanning lines.

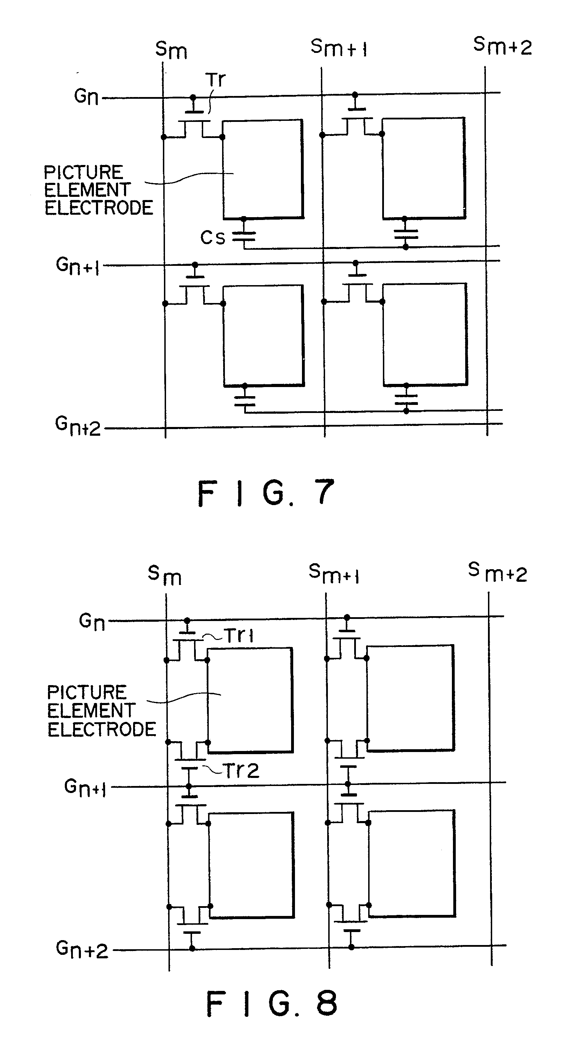

Fig. 7 is a figure of equivalent circuit showing a circuit arrangement of a conventional active matrix substrate. As shown in Fig. 7, this unit picture element is constituted by one transistor and one auxiliary capacitor, and this arrangement is functionally satisfactory (in some cases, this arrangement can function without an auxiliary capacitor).

Possible display defects, however, are a "line defect" and a "point defect", and the "point defect" is far more easily generated. This is because the number of picture elements is much larger than that of lines and therefore a defect probability of the point defect differs from that of the line defect. Several modes are considered in the point defect. In addition, the point defect is easily generated due to a failure of a transistor and a short-circuit in an auxiliary capacitor. In the circuit shown in Fig. 7, if the transistor or the auxiliary capacitor fails, a corresponding picture element causes a display failure, and this bad element becomes a point defect.

Several methods of eliminating the point defect are known. Fig. 8 shows a conventional picture element as an example of these methods. In this figure of equivalent circuit of the picture element, two transistors as active elements are used in a single unit picture element. That is, as shown in Fig. 8, one transistor (Tr1) is connected to an nth scanning line and an mth signal line, and the other transistor (Tr2) is connected to an (n + 1)th scanning line Gn + 1 and the mth signal line Sm. If both the transistors Tr1 and Tr2 normally operate, a picture element voltage has a value written via the transistor Tr2. If the transistor Tr1 fails, the transistor Tr2 must be cut. In the latter case, however, a signal to be written by the transistor Tr1 is no longer a normal signal but becomes the same signal as that of a picture element immediately above the transistor Tr1. Note that when an image does not largely change upon shifting of one picture element as in a display such as a television image, this defect is not remarkable.

In an image apparatus for 0A equipment, however, information cannot be correctly displayed unless each and every dot on a screen correctly indicates a signal. If two transistors are connected to a scanning line of this point defect portion in order to prevent this inconvenience, not only the capacitance of the scanning line is increased, but also propagation of a gate pulse is delayed. As a result, the sizes of the screen and the picture element are increased.

In order to reliably transmit a normal signal to a defective picture element, a plurality of scanning lines or signal lines may be provided for each picture element. In this method, however, the area of a wiring region is increased to reduce an aperture ratio, and adjacent (neighboring) wirings easily form short-circuits. That is, new defect generating factors are introduced in picture elements.

As described above, in the active matrix type liquid crystal display or the like, recovery methods based on conventional schemes are not effective to prevent generation of the point defect caused by, e.g., a failure of a transistor or a short-circuit in an auxiliary capacitor. In addition, if a redundant circuit is added to the display, a disadvantage such as an increase in manufacturing load or a reduction in aperture ratio is apparently caused especially as the size of an image apparatus is increased, its precision is improved, and its resolution is increased.

It is an object of the present invention to provide an image apparatus which can solve the above conventional problems and a method of manufacturing the same.

An apparatus of the present invention is a liquid crystal display comprising an active matrix substrate having a plurality of unit picture elements each including a picture element electrode arranged in a region surrounded by scanning lines and signal lines and a first active element (a transistor or diode) connected to a scanning line, a signal line, and the picture element electrode, an opposed substrate opposing the active matrix substrate, and a liquid crystal layer sandwiched between the active matrix substrate and the opposed substrate, wherein a second active element (e.g., a second transistor) formed to be in a so-called electrically floating state is arranged in each unit picture element.

A method of manufacturing a liquid crystal display according to the present invention is a method of manufacturing a liquid crystal display in which a liquid crystal is sealed between an active matrix substrate having unit picture elements each including a picture element electrode arranged in a region surrounded by scanning lines and signal lines, a first active element (e.g., a first transistor) connected to a scanning line, a signal line, and the picture element electrode, and an electrically floating second active element (e.g., a second transistor), and an opposed substrate, comprising the steps of flowing a current through the scanning and signal lines to perform a display operation, thereby detecting a bad picture element, cutting a first active element (e.g., a first transistor) of the detected bad picture element to set the first transistor in a socalled floating state, and connecting a second active element (e.g., a second transistor) to the scanning and signal lines and the picture element electrode.

That is, according to the present invention, one picture element of the active matrix substrate has two or more transistors, and one of these transistors is already operatively connected to a picture element electrode, a scanning line, and a signal line. If, however, a display defect is found in the unit picture element, its bad element (defective transistor) is disconnected from the circuit, and another normal transistor is connected to the circuit in place of the defective transistor, thereby easily recovering a normal operation of the unit picture element.

In a circuit arrangement in which an auxiliary capacitance (e.g., capacitor) is added to a unit picture element, two or more auxiliary capacitors may be used similarly to the above transistors. That is, in a normal operation, only one of the capacitors which is already connected operates. If this auxiliary capacitor fails, this capacitor is cut and another auxiliary capacitor is connected to the circuit, thereby recovering a normal operation.

In general, a transistor and an auxiliary capacitor on an active matrix substrate easily cause an interlayer short-circuiting due to dust and often fail. Since, however, the size of dust is normally very small, i.e., less than 10 micrometers, a probability of simultaneous failures of a plurality of adjacent elements is low. Therefore, on the basis of the assumption that a plurality of elements do not simultaneously fail, each picture element is constituted by a plurality of elements. As a result, even if a picture element temporarily fails, its normal operation can be easily and rapidly recovered without performing an operation of, e.g., adding a new element. That is, according to the present invention, one element (or a pair of elements), e.g., a transistor (or a pair of a transistor and an auxiliary capacitor) is connected beforehand. When the element fails, only the bad element is instantaneously cut by laser radiation or the like, and another normal element which is arranged in advance is instantaneously connected by laser radiation or the like, thereby writing (displaying) a normal signal. That is, recovery of a failure can be rapidly and easily performed.

Since one element or a pair of elements is or are connected to a circuit beforehand, detection (determination) of a bad element in a picture element can be easily performed, i.e., a bad element can be easily specified. Therefore, this detection step can be automatically performed.

In addition, since the number of wirings such as a signal line and a scanning line is limited to one per picture element, no extra wiring need be provided to recover a defective portion. Therefore, since the number of elements connected to each wiring is one per picture element, a capacitive load of the wiring is not unnecessarily increased. Therefore, specific electrical characteristics of a unit picture element are not undesirably changed.

This invention can be more fully understood from the following detailed description when taken in conjunction with the accompanying drawings, in which:

Fig. 1 is a circuit diagram showing a part of a liquid crystal display according to an embodiment of the present invention;

Fig. 2A is a schematic view showing a pattern of a practical liquid crystal display using the circuit shown in Fig. 1;

Fig. 2B is a longitudinal sectional view showing the liquid crystal display taken along a line A - A' in Fig. 2A;

Fig. 3 is a circuit diagram showing a part of a liquid crystal display according to another embodiment of the present invention;

Fig. 4A is a plan view showing a pattern of a practical liquid crystal display using the circuit shown in Fig. 3;

Fig. 4B is a sectional view showing the liquid crystal display including an opposed substrate taken along a line A - A' in Fig. 4A;

Fig. 5 is a circuit diagram showing a unit picture element of a liquid crystal display according to still another embodiment of the present invention;

Fig. 6 is a plan view showing a practical unit picture element using the circuit shown in Fig. 5;

Fig. 7 is a figure of an equivalent circuit showing a conventional picture element;

Fig. 8 is a figure of an equivalent circuit showing another conventional picture element;

Fig. 9A is a plan view of a picture element;

Fig. 9B is a longitudinal sectional view of the picture element, taken along line A - A' in Fig. 9A;

Fig. 9C is a longitudinal sectional view of the picture element, taken along line B - B' in Fig. 9A;

Fig. 10A is a plan view of another picture element;

Fig. 10B is a longitudinal sectional view of the picture element, taken along line A - A' in Fig. 10A; and

Fig. 10C is a longitudinal sectional veiw of the picture element, taken along line B - B' in Fig. 10A.

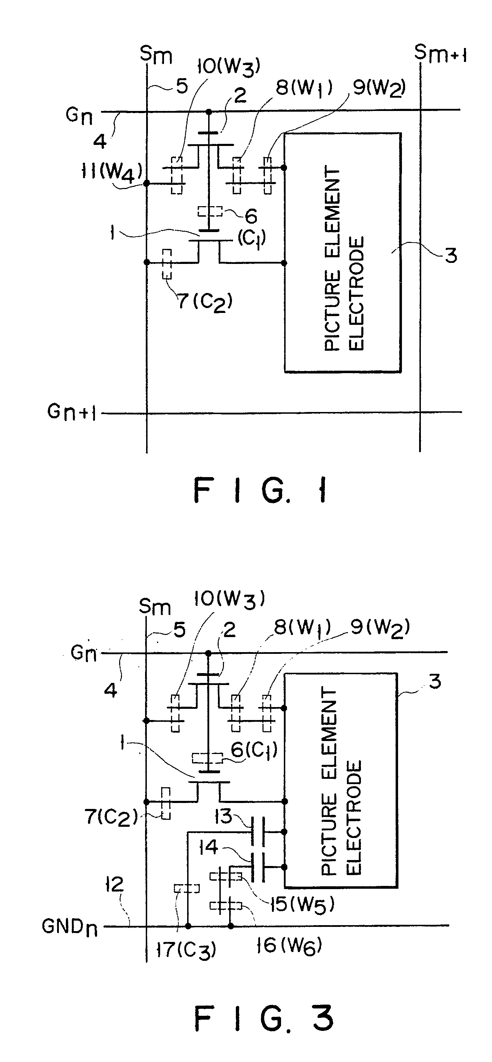

In Fig. 1, the schematic circuit diagram shows a unit picture element constituting an active matrix substrate for a liquid crystal display. As shown in Fig. 1, in this unit picture element, a first transistor 1 and a gate which are already connected are connected to a scanning line 4. A signal line 5 and a display picture element electrode 3 are disconnected from each other, and a second transistor 2 is arranged in a cut state between the signal line 5 and the electrode 3. Examples of these transistors are an amorphous silicon thin film transistor and a polycrystalline silicon thin film transistor.

In this embodiment, as shown in Fig. 1, cut points of the transistor 2 are two portions (8 and 9) between the transistor 2 and the picture element electrode 3 and one portion (10) between the transistor 2 and the signal line. The number of cut points can be increased. For example, a line to be connected to the signal line 5 at a node 11 as shown in Fig. 1 may be arranged in a cut state in advance. Since the circuit is cut at a plurality portions, a contact failure (short-circuit) may occur at a cut portion. However, since a probability of simultaneous contact failures of two or more cut portions is very low, lines which are already connected can be reliably electrically cut.

When the active matrix substrate having the above arrangement is to be used to form a liquid crystal display, whether an unnecessary unit picture element is present in picture elements constituting the substrate can be checked by a display operation test. That is, the active matrix substrate and an opposed substrate are adhered with a gap (interval) of several micrometers therebetween, and a liquid crystal is injected in the gap to form a liquid crystal display. Thereafter, power is supplied to cause the liquid crystal display to perform a display operation, thereby detecting a bad portion. In a normally white (white (positive) obtained when no voltage is applied to a liquid crystal) mode, black (negative) is displayed on a portion of a screen, and this black portion is moved and observed. If an ON current of a transistor is insufficient or an amount of a leakage current is large, this portion changes to white. Therefore, a failure of a transistor in this changed portion is easily found.

As another (bad portion detecting) method, a bad portion can be rapidly found by changing a (display) timing of a signal or changing the width of a gate pulse.

When a bad portion of a transistor is found by the above methods, this bad portion is determined to be the transistor 1 since only one transistor is connected to a corresponding unit picture element.

In order to cut the bad transistor 1, connection layers (indicated by broken lines) 6 and 7 are cut and non-connection layers (indicated by broken lines) 8, 9, and 11 are shorted-circuited.

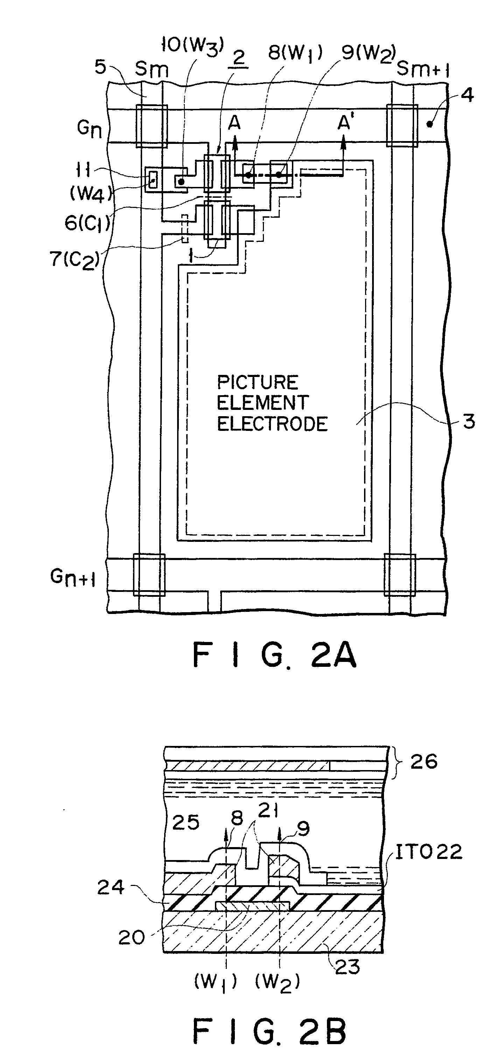

Figs. 2A and 2B are plan and longitudinal sectional views showing a cutting operation of an actual unit picture element.

Fig. 2A is a plan view schematically showing a practical pattern using the circuit shown in Fig. 1. As shown in Fig. 2A, in a cutting operation (step) of the first transistor 1, portions at the position of a connection layer (capacitor) C1 connecting the gate and the scanning line 4 and the position of a connection layer (capacitor) C2 connecting the signal line and a source electrode are melted and evaporated by laser radiation to perform trimming, thereby completing the cutting operation step.

As shown in the longitudinal sectional view of the unit picture element in Fig. 2B, a connection portion in a connecting operation step of the second transistor 2 is a portion at which a lower electrode 20 and an upper electrode 21 are cut in advance while they are vertically overlapped and insulated via an interlayer insulating film 24. When a laser beam is radiated on this overlapped portion in directions indicated by broken-line arrows $W_1$ and $W_2$, the insulating film 24 is destroyed, and the lower and upper electrodes 20 and 21 are melted and connected. This laser radiation is performed on an arbitrary surface of an element formed on a glass substrate 23, and a display state of a corresponding powered picture element can be observed through the glass substrate 23. Therefore, by sequentially or simultaneously radiating a laser beam on connecting points $W_1$ (8), $W_2$ (9), and W3 (10) shown in Fig. 2A, the transistor 2 is connected to the picture element electrode 3 and the signal line 5.

An arrangement of this connection portion is not limited to that of the above embodiment. For example, the interlayer insulating film 24 can be constituted by including a semiconductor layer. In addition, the material of the upper and lower electrodes may be the same as or different from that of the general gate or the source/drain.

As is apparent from Fig. 2A, since a signal is written as a normal signal in the picture element electrode 3 via the transistor 2, a point defect can be satisfactorily recovered. In addition, before recovery, the transistor 2 is connected to the scanning line 4 but is set in an electrically floating state because it is cut from the signal line 5 and the electrode 3. Therefore, the transistor 2 hardly serves as a capacitive load on the scanning line 4. For this reason, substantially the same propagation delay as that of a conventional single transistor type picture element is realized. In addition, since the cut element is in an electrically floating state, an effect similar to that of a conventional picture element is obtained upon recovery.

This embodiment is applied to an active matrix liquid crystal display having 1,920 x 480 picture elements and a diagonal of 10 to 12 inches, and, for example, all of several point defects can be eliminated by recovery. As a result, almost no difference is found in display characteristics of the recovered picture element from those of surrounding normal picture elements, i.e., a good nondefective picture element is obtained, and the manufacturing yield is largely improved.

In this embodiment, the layer between the transistor 2 and the picture element electrode 3 is cut at two portions, and these cut portions actually have small electrical capacitances in addition to the above effects. Since the number of cut portions is two, these portions are connected in series with each other to further reduce their capacitances. As a result, noise of a gate pulse produced by a gate-source capacitance of the transistor 2 is prevented from entering into the picture element electrode 3, thereby reducing a noise amount.

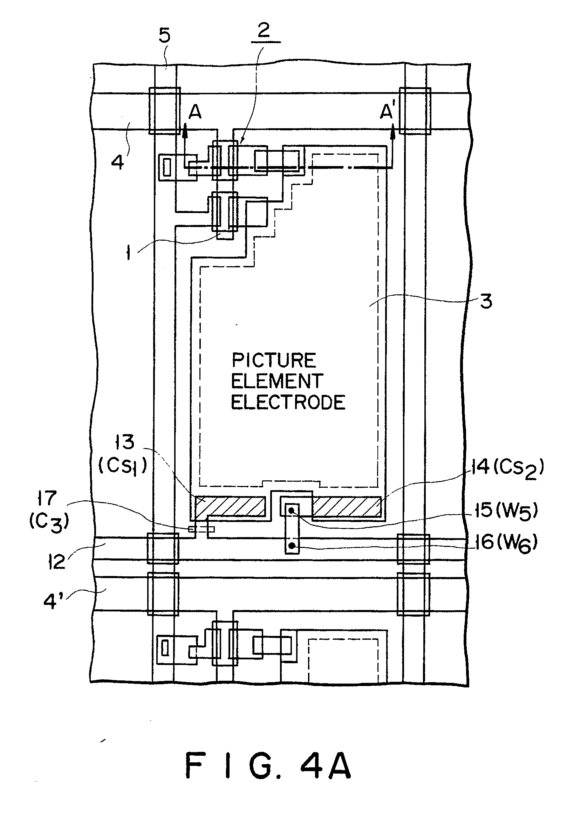

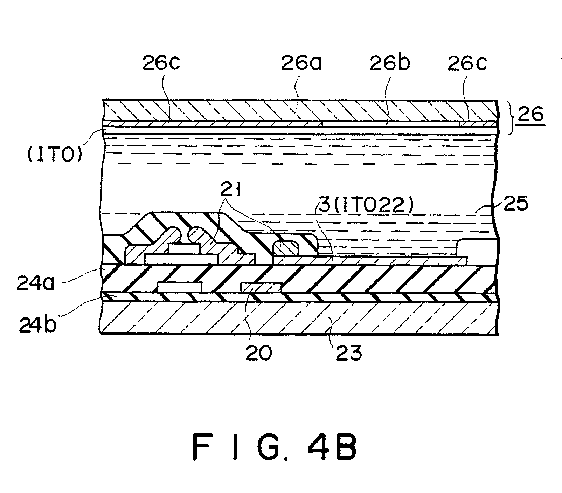

Fig. 3 is a circuit diagram for explaining another embodiment of the present invention, Fig. 4A is a plan view showing one pattern of a practical unit picture element using the circuit shown in Fig. 3, and Fig. 4B is a sectional view showing the pattern including an opposed substrate taken along a line A - A' in Fig. 4A.

In this embodiment, an auxiliary capacitor is used in addition to a transistor in a unit picture element. That is, an auxiliary capacitor 13 is constituted by an ITO 22 as a picture element electrode, a lower electrode consisting of the same material as that of a ground line 12, and an insulator sandwiched between the electrodes. One end of the auxiliary capacitor 13 is connected to the picture element electrode 3, and its other end is connected to the ground line 12. An auxiliary capacitor 14 is disconnected from the ground line 12 at two non-connection layers (indicated by broken lines in Fig. 3 -- closed circles in Fig. 4A) 15 and 16. Transistors 1 and 2 have the same arrangement as that of the above embodiment.

An auxiliary capacitor failure means a phenomenon in which two electrodes shorted-circuit to cause an electric charge of a picture element to leak to a ground line. This phenomenon can be easily determined since a display state changes as a voltage (applied) to the ground line is changed. If a bad portion is present in the auxiliary capacitor, it is determined that the bad portion is present in an already connected one (auxiliary capacitor 13). In this case, a corresponding portion is cut (e.g., laser cutting is performed for a connection layer (indicated by a broken line) 17 ($C_3$), and laser

welding is performed to connect non-connection layers (indicated by broken lines) 15 ($W_5$) and 16 ($W_6$) by welding as in the above embodiment in order to connect the originally disconnected auxiliary capacitor 14 ($CS_2$) to the ground line 12, thereby recovering the picture element. In this manner, this picture element is easily recovered well as a circuit with almost no change in display function. Since the capacitive load of the ground line is particularly (electrically) not changed before and after the recovery operation, the same ground line resistance per unit picture element may be generally adopted as in the case of an auxiliary capacitor.

Additionally, one transistor and two capacitors may be constituted in a unit picture element.

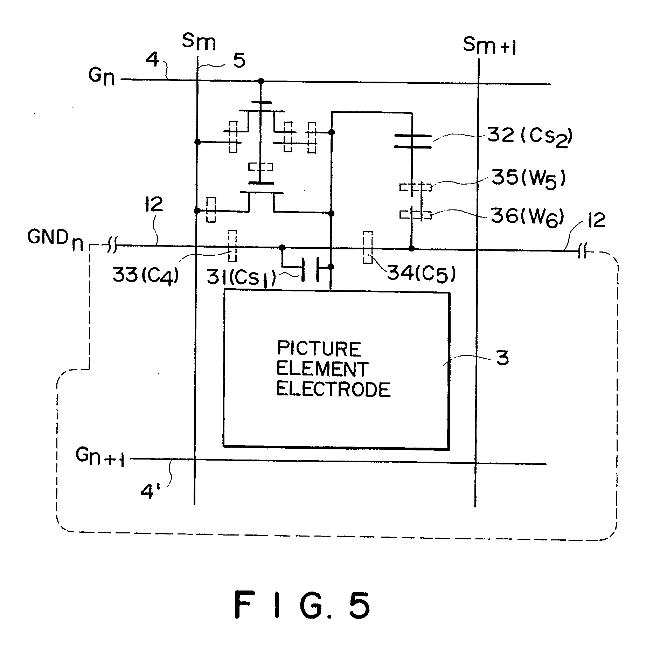

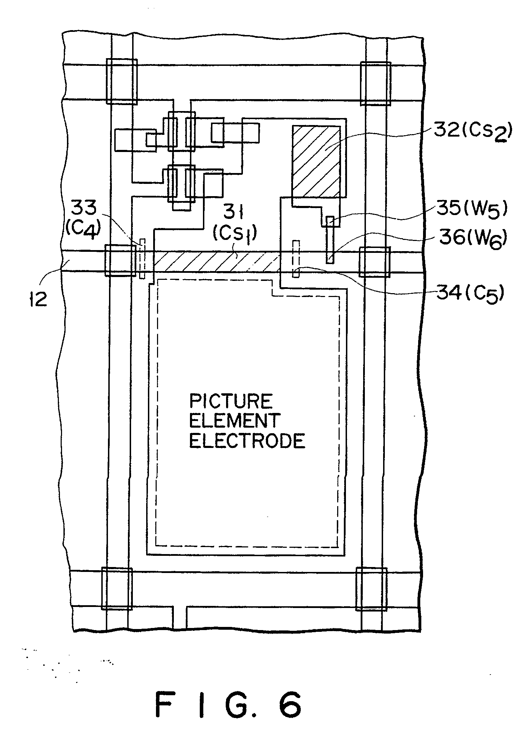

Fig. 5 is a circuit diagram of a unit picture element schematically showing still another embodiment of the present invention, and Fig. 6 is a plan view schematically showing a practical unit picture element using the embodiment shown in Fig. 5.

This embodiment is another embodiment of a picture element having a transistor and an auxiliary capacitor similar to that shown in Fig. 3 except that the structure of an auxiliary capacitor is different from that shown in Fig. 3.

In the arrangement shown in Fig. 4A, a probability of short-circuiting is slightly high since the ground line 12 and a scanning line (Gn + 1) 4' of the next unit picture element are formed close to each other. In this embodiment, as shown in Figs. 5 and 6, a ground line 12 is formed between two scanning lines 4 and 4'. A preconnected auxiliary capacitor 31 ($CS_1$) is formed between the ground line 12 crossing the picture element and a picture element electrode 3. An auxiliary capacitor 32 is disconnected from the ground line 12 at two cut portions 35 and 36. If the auxiliary capacitor 31 ($CS_1$) fails in such a wiring pattern, the ground line 12 is cut at two portions (33 and 34) and the preliminary auxiliary capacitor 32 is connected to the ground line 12, as shown in Fig. 6. That is, an auxiliary capacitance layer of the capacitor 31 ($CS_1$) stacked at the same position as the ground line 12 is laser-cut at connection layers (indicated by broken lines) 33 ($C_4$) and 34 ($C_5$), and the function of a power supply layer of the ground line 12 is maintained. Laser welding is performed at non-connection layers (indicated by broken lines) 35 (W5) and 36 (W6), and the preliminary auxiliary capacitor 32 ($CS_2$) is connected to the ground line 12 to recover the defect.

As shown in Fig. 4B, the opposed substrate is constituted by a plurality of layers. That is, the uppermost layer of the opposed substrate consists of transparent glass, and its second layer adjacent to this glass layer 26a has a portion opposing the picture element electrode 3. This portion is constituted by a semitransparent color filter (G, R, and B) 26b and a black matrix (BM) 26c which covers a circuit portion of the unit picture element except for a display surface. Therefore, only a display pattern (mark) appearing in a liquid crystal 25 can be seen through the filter 26b like a window. As shown in Fig. 4B, the insulator which forms the transistor is constituted by two layers of a gate insulator 24a consisting of $SiO_x/SiN_x$ and an undercoated insulator 24b.

Note that the structure of the transistor is not limited to that shown in Fig. 4B. For example, an etching stopper insulator may be formed in the transistor portion shown in Fig. 4B, or an $n^+/i$ layer may be continuously formed and only an $n^+$ layer at a channel portion may be etched. In addition, a self-alignment TFT may be adopted.

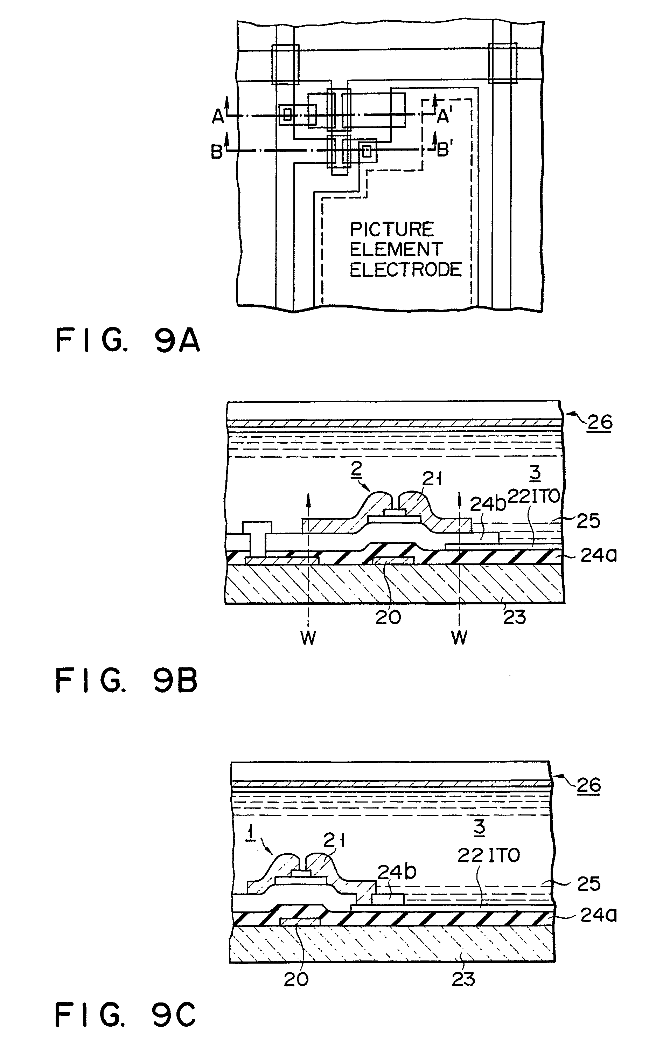

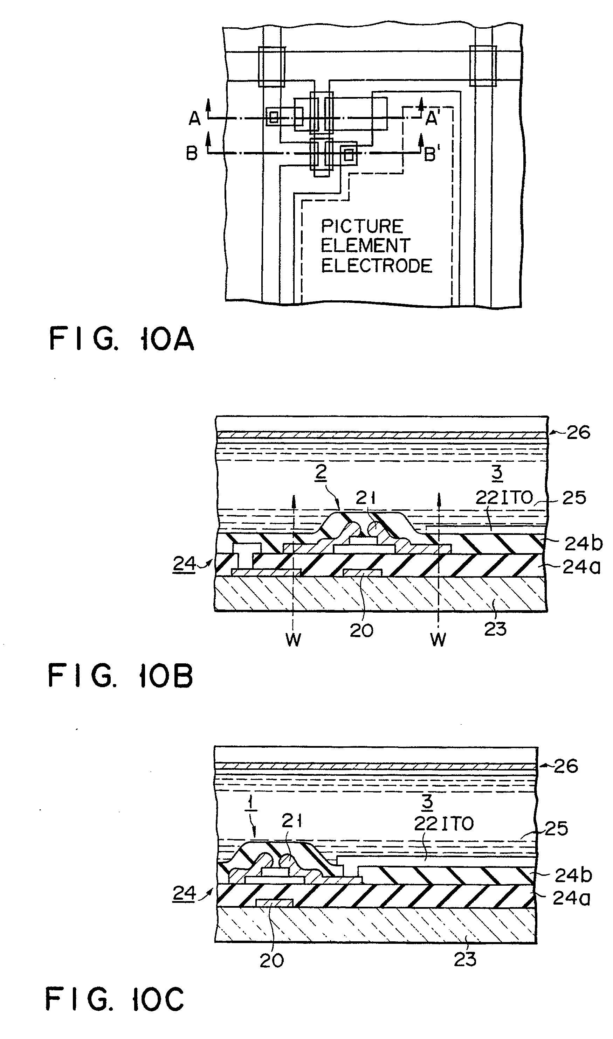

Figs. 9 and 10 are longitudinal sectional views each showing a layer structure including the transistor portion 2 and the picture element electrode 3 of the unit picture element.

Referring to Fig. 9, the transistor 1 and the electrode 3 can be connected by forming a contact hole in an insulator 24b. That is, Fig. 9 shows a relationship between the transistor portion 2 formed in an arbitrary position of the insulating substrate 23 consisting of glass or the like and the picture element electrode 3 separated into a plurality of layers by the insulators 24a and 24b. As shown in Fig. 9, one end of the upper electrode 21 is arranged above, in a stacking direction, the ITO (Inidum Tin Oxide) 22 as the picture element electrode of the liquid crystal 25 sandwiched between the interlayer insulator 24a and the transparent insulator 24b.

Referring to Fig. 10, a positional relationship between the ITO 22 and the upper electrode 21 is opposite to that shown in Fig. 9. That is, as shown in Fig. 10, the upper electrode 21 is covered with a portion of the upper insulator 24b and stacked on the interlayer insulator 24a. The upper electrode 21 is located below, in the stacking direction, the electrode 3 stacked on the insulator 24b.

More specifically, the above two embodiments show modifications of the stacking position of the picture element electrode 3, in both of which the upper electrode 21 of the transistor and the picture element electrode 3 are overlapped in the stacking direction via the upper insulator 24b. Therefore, when laser radiation is performed on the overlapped portion in the direction indicated by a broken-line arrow W in Fig. 9 or 10, the insulator in this portion is destroyed, and the two electrodes (the picture element electrode 3 and the upper electrode 21) present above and below this portion are melt-connected.

In each of the embodiments shown in Figs. 9 and 10, by forming the ITO (Indium Tin Oxide) 22 of the picture element electrode and the upper electrode 21 in different layers, a probability of a contact failure (i.e., a short-circuit) between the two electrodes can be reduced in addition to the above effects.

In the arrangement shown in Fig. 10, since the picture element electrode cannot be arranged at the uppermost portion, the uniformity of a cell gap (cell interval) can be improved, and a probability of occurrence of a rubbing failure upon orientation (opposed arrangement) can be reduced.

In addition to the above modifications, various types of modifications of the above embodiments can be made. For example, the arrangement of the auxiliary capacitor 13 is not limited to the above structure, but a stacked film with an amorphous silicon layer may be used instead of the insulator 24 only. The upper electrode 21 may be formed of the same material as that of the signal line 5 and connected to the picture element electrode 3. Although the auxiliary capacitor 13 is connected to the ground line 12 in each of the above embodiments, the capacitor 13 may be connected to the adjacent scanning line 4 as in a conventional structure. A diode may be used instead of the transistor as the active element of the above embodiments.

Although a liquid crystal display is exemplified as an application of the active matrix substrate, the present invention can be applied to another display, e.g., a plasma display or an EL (electroluminescence) device. In addition, the present invention can be practiced when it is applied to an input device such as a contact sensor.

Also, a manufacturing method of the present invention can be variously modified. That is, in the above embodiments, the cutting step and the connecting step of the transistor are performed at two out of three terminals of the transistor. However, these steps may be performed at the three terminals. Although the gate is connected in advance, it may be cut in advance. In the cutting and connecting steps, a laser trimming apparatus and a laser welder are used. However, cutting may be performed by etching, or laser CVD may be used to form a film to perform the connecting step.

Furthermore, the order of the detecting, cutting, and connecting steps of a bad portion can be arbitrarily changed.

As has been described above, according to the present invention, a point defect of a liquid crystal display can be satisfactorily recovered. As a result, the yield is largely improved. Since no extra line need be formed, no other defects occur, and an aperture ratio is not reduced. In addition, recovery can be rapidly and easily performed. Furthermore, since a change in electrical characteristics can be minimized before and after recovery, an increase in capacitive load can be suppressed upon installation of a redundant circuit.

In particular, almost no increase is produced in particularly problematic signal delay even in a large substrate. Therefore, since specific performance of the display need not be sacrificed for recovery, the total cost performance of the display can be improved by improving the manufacturing yield and facilitating automatic restoration process.

Moreover, according to the present invention, even if a failure occurs or a bad portion is detected after a product is placed on the market, the bad portion can be rapidly and easily recovered without replacing the overall liquid crystal display. Therefore, a repair cost of a product can be largely reduced and a product life can be largely improved.

## Claims

1. A liquid crystal display comprising: an active matrix substrate having a plurality of unit picture elements each having a scanning line (4), a signal line (5), a picture element electrode (3), and a first active element (1) connected to said scanning line (4), said signal line (5), and said picture element electrode (3);

   an opposed substrate (26) opposing said active matrix substrate; and

   a liquid crystal layer (25) sandwiched between said active matrix substrate and said opposed substrate (26),

   wherein each of said unit picture elements further has a second active element (2) and has a structure in which at least portions of wirings between a terminal of said second active element (2) and said picture element electrode (3'), are vertically overlapped and insulated from each other.

2. A display according to claim 1, characterized in that said-first and second active elements (1) are transistors, said-picture element electrode (3) being connected to a source or a drain of said transistor.

3. A display according to claim 1, characterized in that said first and second active elements (1) are dioded, said picture element electrode (3) being connected to an anode or a cathode of said diode.

4. A display according to claim 1, characterized in that said unit picture element has at least (a plurality of) first and second auxiliary capacitors (13, 14) and one ground line (12), said first auxiliary capacitor (13) being connected to said ground line (12), and said second auxiliary capacitor (14) having a structure in which at least portions of wirings formed between an electrcde of said second auxiliary capacitor (14) and said ground line (12) are vertically overlapped and insulated from each other.

5. A display according to claim 4, characterized in that said first auxiliary capacitor (13) is constituted by a capacitor consisting of an interlayer insulator (24).

6. A method of manufacturing a liquid crystal display comprising an active matrix substrate having a unit picture element having a scanning line (4), a signal line (5), a picture element electrode (3), a first active element (1) connected to said picture element electrode (3), and a second active element (2) having a structure in which at least portions of wirings between an electrode of said first active element (1) and said picture element electrode (3) are vertically overlapped and insulated from each other, and a liquid crystal layer (25) sealed between said active matrix substrate and an opposed substrate (26), comprising the steps of:

   applying a voltage to said scanning line (4) and said signal line (5) to perform a display operation of said unit picture element;

   cutting a wiring of said first active element (1) constituting a unit picture element which is determined to be bad on the basis of the display operation so as to set said first active element (1) in an electrically floating state; and

   connecting said second active element (2) to said scanning line (4), said signal line (5), and said picture element electrode (3) via the vertically overlapped and insulated portions.

7. A method according to claim 6, characterized in that said cutting step is performed by laser cutting.

8. A method according to claim 6, characterized in that said cutting step is performed by etching.

9. A method according to claim 6, characterized in that said connecting step is performed by laser welding.

10. A method according to claim 6, characterized in that said connecting step is performed by forming a film by using laser CVD.

11. A display according to claim 1, characterized in that said wirings between said second transistor (2) and picture element electrode (3) are vertically overlapped and insulated from each other, and said source or drain electrode of second transistor (2) and said picture element electrode (3) exist on different layers.

12. A display according to claim 11, characterized in that said picture element electrode (3) and a signal line (5) exist on difference layers.

13. A display according to claim 12, characterized in that said picture element electrode (3) consists of ITO (Indium Tin Oxide) (22).

14. A display according to claim 11 or 12, characterized in that said picture element electrode (3) is arranged to overlap said upper electrode (21) in a stacking direction. ·

15. A display according to claim 12, characterized in that said opposed substrate (26) is constituted by a transparent glass layer (26a) as an uppermost layer, a semitransparent filter layer (26b) formed adjacent to said glass layer and facing said picture element electrode (3) as an opposing display surface, and a black matrix layer (26c) covering a circuit portion of said unit picture element except for said display surface.

16. A display according to claim 12, characterized in that said insulator (24) is constituted by a gate insulator (24a) consisting of $SiO_x/SiN_x$ and an undercoated insulator (24b) formed adjacent to said gate insulator (24a).

17. A display according to claim 12, characterized in that said insulator (24) is constituted by an etching stopper insulator which is formed in a transistor portion and in which an $n^+/i$ layer is continuously formed and only an $n^+$ layer in a channel portion is etched, and a self-alignment TFT.

18. A display according to claim 12, characterized in that said insulator (24) is constituted by a self-alignment TFT and two capacitors (13, 14).

F I G. 1

F I G. 3

F I G. 2A

F I G. 2B

F I G. 4A

PICTURE ELEMENT ELECTRODE

26c      26a      26b      26c

26

(ITO)

21      3(ITO22)      25

24a

24b

20      23

# F I G. 4B

EP 0 430 418 A2

Sm

Sm+1

Gn

4

5

32 (Cs₂)

35 (W₅)

36 (W₆)

12

12

GNDn

33 (C₄)

31 (Cs₁)

34 (C₅)

PICTURE
ELEMENT
ELECTRODE

3

Gn+1

4'

F I G. 5

32(Cs₂)

33
(C₄)

31
(Cs₁)

35(W₅)

36(W₆)

12

34(C₅)

PICTURE
ELEMENT
ELECTRODE

F I G. 6

F I G. 7

F I G. 8

PICTURE
ELEMENT
ELECTRODE

## FIG. 9A

26

2  21  24b 22 ITO  3

25

24a

W  20  W  23

## FIG. 9B

26

1  21  3

24b  22 ITO

25

24a

20  23

## FIG. 9C

FIG. 10A

FIG. 10B

FIG. 10C